# EUROPÄISCHE PATENTSCHRIFT

(11) **EP 0 656 138 B1**
(45) Veröffentlichungstag und Bekanntmachung des Hinweises auf die Patenterteilung: **25.08.1999**
(21) Anmeldenummer: 94922860.5
(22) Anmeldetag: 22.06.1994
(51) Int. Cl.: G07C 3/00, G01D 21/00, G01D 5/252

(54) **VERFAHREN UND VORRICHTUNG ZUM FESTSTELLEN DES ZUSTANDES VON MASCHINEN MIT MEHREREN MESSSTELLEN**
PROCESS AND DEVICE FOR DETERMINING THE CONDITION OF MACHINES WITH SEVERAL MEASURING POINTS
PROCEDE ET DISPOSITIF PERMETTANT DE DETERMINER L'ETAT DE MACHINES EN PLUSIEURS POINTS DE MESURE

(30) Priorität: 22.06.1993 DE 4320657
(43) Veröffentlichungstag der Anmeldung: 07.06.1995
(73) Patentinhaber: Prüftechnik Dieter Busch AG, 85737 Ismaning (DE)
(72) Erfinder: LYSEN, Heinrich, D-80809 München (DE)
(86) Internationale Anmeldenummer: EP9402035
(87) Internationale Veröffentlichungsnummer: WO9500930

(56) Entgegenhaltungen:
- EP-A- 0 023 879
- EP-A- 0 194 333
- EP-A- 0 211 212
- EP-A- 0 311 023

## Beschreibung

Die Erfindung bezieht sich auf ein Verfahren gemäß dem einleitenden Teil des Patentanspruchs 1 und auf eine zum Durchführen dieses Verfahrens geeignete Vorrichtung gemäß dem einleitenden Teil des Patentanspruchs 5.

Ein Verfahren und eine Vorrichtung dieser Art offenbart die DE 35 23 289 C2. Gemäß diesem Stand der Technik werden zur Bildung der Kenndaten der jeweiligen Meßstelle beim oder nach dem Ansetzen des Meßkopfes an den Ansetzteil mittels einer im Meßkopf vorgesehenen Abtasteinrichtung optische, magnetische oder mechanische Kodierelemente am Ansetzteil der Reihe nach dadurch abgetastet, daß die Abtasteinrichtung an den Kodierelementen vorbeibewegt wird. Dies geschieht bei einer bekannten Ausführungsform unter Ausnutzung der Annäherungsbewegung des Meßkopfes beim Ansetzen an den Ansetzteil und bei einer anderen bekannten Ausführungsform dadurch, daß die Abtasteinrichtung nach dem festen Ansetzen des Meßkopfes an den Ansetzteil mittels eines in den Meßkopf eingebauten Antriebs motorisch verschoben wird. Im ersteren Falle ist eine besondere Sorgfalt seitens der Bedienungsperson erforderlich und im letzteren Falle bedingt der Antrieb einen erheblichen baulichen Aufwand und einen relativ großen Meßkopf. In beiden Fällen kann mit einem vernünftigen Bauaufwand bei handlich bleibendem Meßkopf nur eine relativ geringe Anzahl maximal möglicher unterschiedlicher Kodierungen für die Meßstellen erreicht werden.

Aus der EP 023 879 A3 ist es bekannt, eine Abfrage von Identifikationssignalen von Meßstellen für die Ermittlung des Zustandes von Maschinen durchzuführen, ohne dass eine Relativbewegung zwischen einer Abtasteinrichtung und zugeordneten Kodierelementen erforderlich ist. Dazu sind mehrere Widerstände als elektrisch wirkende Kodierelemente vorgesehen. Sie sind in einer Parallelschaltung angeordnet und werden gemeinschaftlich hinsichtlich eines Gesamtwiderstandes abgefragt. Für eine zuverlässige Arbeitsweise ist jedoch eine präzise Kontaktierung der Widerstands-Anordnung unter Einhaltung eines definierten Übergangswiderstandes erforderlich.

Der Erfindung liegt die Aufgabe zugrunde, ein Verfahren gemäß dem Oberbegriff des Patentanspruchs 1 zu schaffen, das es ermöglicht, eine in weiten Grenzen beliebige Anzahl von Meßstellen rasch und sicher zu erkennen und abzufragen, ohne daß es einer besonderen Sorgfalt seitens der den Meßkopf handhabenden Person bedarf, und das sich überdies mit konstruktiv einfachen Mitteln durchführen läßt.

Die vorstehende Aufgabe wird durch die im Kennzeichnungsteil des Patentanspruchs 1 genannten Merkmale gelöst.

Die Unteransprüche 2 bis 4 haben bevorzugte Ausgestaltungen des Verfahrens gemäß Patentanspruch 1 zum Gegenstand.

Die Erfindung schafft auch eine hinsichtlich Funktionsweise, Betriebssicherheit und baulichem Aufwand besonders vorteilhafte Vorrichtung zum Durchführen des Verfahrens nach Anspruch 1. Die Kernmerkmale dieser Vorrichtung nennt der Patentanspruch 5.

Die Unteransprüche 6 bis 13 betreffen bevorzugte Ausführungsformen der Vorrichtung gemäß Anspruch 5.

Ein nebengeordneter Aspekt der Erfindung wird im unabhängigen Anspruch 14 angegeben. Dieser hat eine bevorzugte Abwandlung der Vorrichtung nach den Ansprüchen 5 bis 13 zum Gegenstand. Die in Anspruch 14 angegebene Vorrichtung ermöglicht es, auch unzugängliche Meßstellen in erfindungsgemässe Überwachungsvorgänge einzubeziehen, z.B. im Falle einer verbauten Meßstelle.

Nach dem Stand der Technik war es bislang nämlich bislang nämlich nicht möglich, verbaute oder unzugängliche Meßstellen mit einem lösbar an eine Maschine ansetzbaren Messkopf abzufragen. D.h., eine quasi gleichzeitige Erfassung sowohl von Messdaten zur Feststellung des Betriebszustandes von Maschinen als auch von zusätzlichen Kenndaten zur Identifikation einer jeweils aktuell abgefragten Meßstelle konnte mit einem umsetzbaren Messkopf bei verbauten Meßstellen nicht durchgeführt werden.

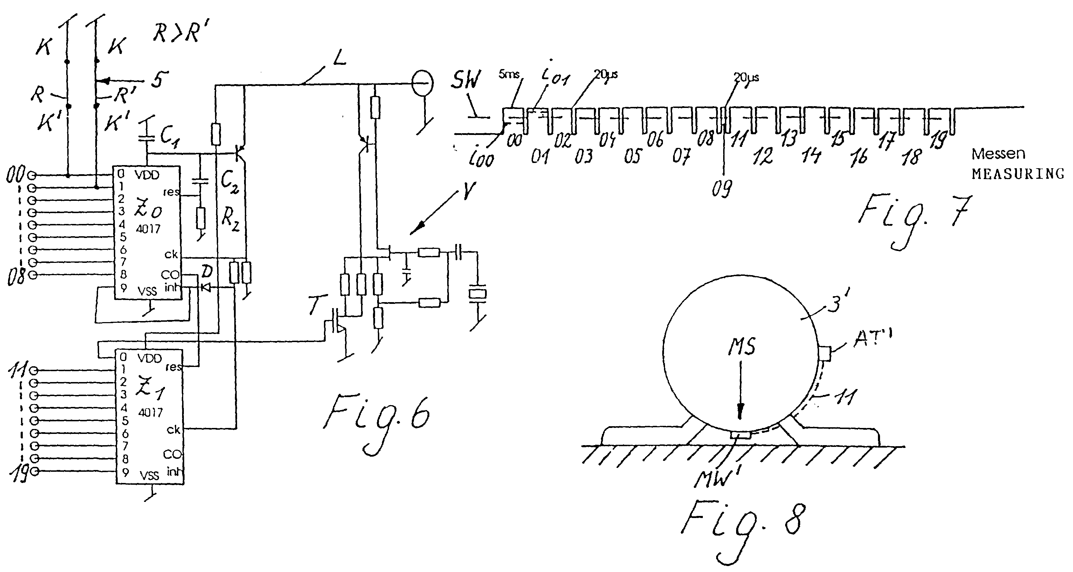

Die vorliegende Erfindung löst auch das vorgenannte Problem, und zwar dadurch, dass ein abzufragender Messwandler von einer Identifikationsdaten liefernden Einheit räumlich separiert wird, was unter Zuhilfenahme einer elektrischen Steckverbindung möglich ist und wie dies an späterer Stelle in der noch folgenden Erläuterung zu Fig. 8 dargestellt wird.

Dementsprechend betrifft eine spezielle Ausgestaltung der Erfindung eine Vorrichtung zur Abfrage von Messwandlern, die eine zu prüfende physikalische Grösse in ein entsprechendes elektrisches Signal umwandeln, wobei die Messwandler an unzugänglichen Messstellen an Maschinen permanent angebracht sind, und die Vorrichtung dann dadurch charakterisiert wird, dass in kombinierter Weise
- ein Ansetzteil an zugänglichen Abfragestellen der Maschine oder Maschinen starr befestigt ist,
- an jeden Ansetzteil ein Messkopf angesetzt werden kann,
- jeder Ansetzteil zum Führen und ausgerichteten Befestigen des Messkopfes an der betreffenden Abfragestelle dient,
- der Messkopf zur Übertragung von Daten an einen zugeordneten Rechner geeignet ist,
- der Messkopf mit einer Gegensteckkontakteinrichtung versehen ist,
- an jedem Ansetzteil sich ein Steckverbindungsteil befindet,
- jedes Steckverbindungsteil mit einem Kabel mit dem an der (unzugänglichen) Messstelle befindlichen zugehörigen Messwandler verbunden ist,
- jedes Steckverbindungsteil mit der Gegensteckkontakteinrichtung des Messkopfes steckbar in Kontakt gebracht werden kann,
- jeder Ansetzteil mehrere Kodierelemente aufweist, welche relativ zu diesem eine feste räumliche Lage einnehmen,
- durch die Kodierelemente für einen angesetzten Messkopf eine Kodierung eines für die Abfragestelle kennzeichnenden elektrischen Kennsignals vermittels zugehöriger Kontakteinrichtungen bestimmt wird, welche sich an dem Messkopf befinden
- jedem Kodierelement eine eigene Kontakteinrichtung zugeordnet ist.

Der Anspruch 15 hat Merkmale zum Gegenstand, die es dem Benutzer der erfindungsgemäßen Vorrichtung gestatten, auf sehr einfache Weise die Kodierung der einzelnen Meßstellen nach seinen eigenen Vorstellungen individuell selbst, ggf. erst am Einsatzort, selbst zu gestalten.

Die Erfindung wird nachstehend anhand der Zeichnung an Ausführungsbeispielen noch näher erläutert. In der Zeichnung zeigt:
- Fig.1: einen Ansetzteil in Draufsicht mit Blickrichtung gemäß Pfeil I in Fig. 2
- Fig.2: den Ansetzteil gemäß Fig. 1 im Längsschnitt entlang der Schnittlinie II-II in Fig.1 mit dem unteren Teil des daran angesetzten Meßkopfes,
- Fig.3: Ansetzteil und Meßkopf im getrennten Zustand, von der Seite gesehen,
- Fig.4: eine abgewandelte Ausführung des Ansetzteils in Draufsicht mit Blickrichtung gemäß Pfeil III in Fig. 5,
- Fig.5: den Ansetzteil gemäß Fig. 4 mit dem unteren Teil des angesetzten Meßkopfes im Längsschnitt gemäß der Schnittlinie V-V in Fig.4,
- Fig.6: eine Multiplexerschaltung zur Verwendung in Verbindung mit dem Ansetzteil und dem Meßkopf gemäß Fig. 1 bis 3 bzw. Fig. 4 und 5,
- Fig.7: ein Diagramm, das den zeitlichen Verlauf von Strom und Spannung auf der Leitung L der Schaltung gemäß Fig. 6 zeigt, und
- Fig.8: eine schematische Darstellung, die eine Abwandlung der erfindungsgemäßen Vorrichtung wiedergibt.

Das nachstehend beschriebene Verfahren und die im folgenden erläuterte Vorrichtung erlauben es, Meßstellen MS an Maschinen hinsichtlich irgendwelcher dort vorherrschender Meßgrößen, die z.B. für den Grad des Verschleißes kennzeichnend sind, von Zeit zu Zeit nacheinander mittels eines von einer Bedienungsperson gehandhabten Meßkopfes MK abzufragen und die Daten in einen Rechner einzugeben, wobei der Rechner automatisch jeweils Kenndaten mitgeliefert bekommt, die die betreffende Meßstelle individuell von den anderen Meßstellen unterscheidbar kennzeichnen. Die abzutastenden Meßstellen können sich bei den verschiedenartigsten Maschinen an vielerlei Punkten befinden. Bei Anlagen mit mehreren Maschinenzügen zu mehreren Maschinen mit jeweils mehreren Meßstellen kann insgesamt eine ganz erhebliche Anzahl abzutastender Meßstellen vorhanden sein, die abgefragt werden müssen.

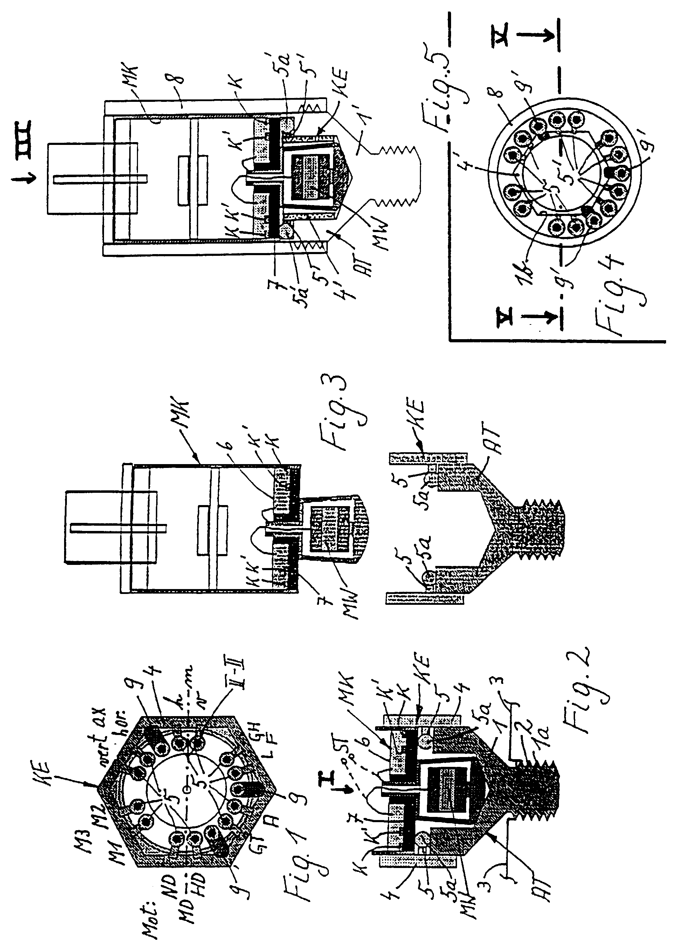

Zur Gewinnung der Meßdaten und der Kenndaten ist an jeder Meßstelle MS ein Ansetzteil AT befestigt, der mit dem von der Bedienungsperson gehandhabten Meßkopf MK zusammenarbeitet und von dem in den Fig. 1 bis 3 eine erste bevorzugte Ausführungsform dargestellt ist.

Der Ansetzteil AT gemäß Fig. 1 bis 2 weist einen Grundkörper 1 mit einem Schraubgewindeansatz la auf, der in eine Gewindebohrung 2 eingeschraubt ist, die sich in der Wandung einer zu überwachenden, in Fig. 2 nur angedeuteten Maschine 3 an der jeweiligen Meßstelle MS befindet. Der Grundkörper 1 ist von der Maschine 3 weg als Sechskant, z. B. SW17, gestaltet, so daß er wie eine Schraube mit Sechskantkopf in die Maschine 3 fest einschraubbar ist.

Zu dem Ansetzteil AT gehört des weiteren ein zur Sechskantform des Grundkörpers 2 passender, auf diesen aufsteckbarer Halter 4, von dessen Innenwandung Kodierelemente 5 einwärts vorragen, die sich im aufgesteckten Zustand des Halters 4 mit verbreiterten kugeligen Enden, die Druckkörper 5a bilden, auf der Stirnfläche des Grundkörpers 1 abstützen. Die Kodierelemente 5 sind so gestaltet, daß sie zwar fest mit der Innenwandung des Halters 4 verbunden sind, aber leicht davon entfernt, z.B. abgebrochen, werden können.

Wie aus Fig. 1 ersichtlich, sind an jeder der sechs geraden Innenflächen des Halters 4 zwei Kodierelemente 5, also insgesamt zwölf solche Elemente, symmetrisch zur jeweiligen Flächenmitte angebracht. In drei der sechs Ecken sind darüber hinaus drei weitere Kodierelemente 9 befestigt, die eine massivere Verbindung zum Halter 4 aufweisen, weil sie in keinem Falle entfernt zu werden brauchen.

Die zwölf entfernbaren Kodierelemente 5 dienen auf die nachstehend noch erörterte Weise der Kodierung der jeweiligen Meßstelle MS und vermögen jeweils mit einem Kontaktpaar K, K' zusammenzuwirken, das sich bei angesetztem Meßkopf MK (Fig.2) jeweils über ihnen befindet. Die beiden Kontakte K und K' jedes Kontaktpaares haben einen gewissen gegenseitigen Abstand in radialer Richtung und sind von einer mit ihnen verbundenen Leitgummischicht 7 überbrückt. Die Kontakte K,K' sind im Inneren des Meßkopfes MK an einer Leiterplatte 6 in einer derartigen Position angebracht, daß der zugehörige Druckkörper 5a mit seinem kugeligen Kopf zwischen ihnen auf die Leitgummischicht 7 drückt, so daß der Leitgummi zwischen diesen Kontakten K, K' einen kleineren Widerstand aufweist als an den Positionen, wo die Druckkörper 5a entfernt worden sind und demgemäß der Leitgummi zwischen den dortigen Kontakten K, K' nicht beaufschlagt wird.

Die Druckkörper 5a vermögen also durch ihr Vorhandensein oder Nichtvorhandensein die beiden unterschiedlichen Werte 0 und L einer Binärziffer einer entsprechend der Anzahl möglicher vorhandener Druckkörper zwölfstelligen binären Zahl darzustellen, die bekanntlich 4096 verschiedene Werte haben kann.

Die einzelnen Werte dieser Binärzahl sind dadurch vorgebbar, daß die die Kodierelemente bildenden Druckkörper 5a in einer entsprechenden Kombination an ihrer Stelle belassen oder weggebrochen werden. Die leichte Entfernbarkeit der zwölf Druckkörper 5a von der Innenwand der Halterung 4 gestattet es, die Kodierung im Bedarfsfalle individuell erst beim Einrichten der Meßstelle in passender Weise vorzunehmen.

Wie aus Fig. 2 ersichtlich, weist der von außen in den Halter 4 verdrehungssicher einschiebbare Meßkopf MK an seiner dem Grundkörper 1 des Ansetzteils AT zugewendeten Seite einen Meßwandler MW auf, der im vorliegenden Falle ein piezoelektrischer Kristall ist, der über den Grundkörper 1 in festen mechanischen Kontakt mit der Maschine 3 bringbar ist und dazu dient, mechanische Schwingungen und Erschütterungen der Maschine, die in einer bestimmten Achsrichtung, hier in Richtung der Symmetrieachse des Ansetzteils AT und des Meßkopfes MK, wirken, in ein entsprechendes elektrisches Signal umzuwandeln, das als Meßsignal in den Rechner eingegeben wird.

Die Fig. 3 zeigt den Ansetzteil AT und den Meßkopf MK der Ausführungsform gemäß Fig. 1 und 2 im Zustand vor dem Zusammenstecken.

Die Ausführungsform gemäß Fig. 4 und 5 unterscheidet sich von derjenigen gemäß Fig. 1 bis 3 nur dadurch, daß der Halter 4' in ein mittiges Sechskantloch 1b im Grundkörper 1 eingefügt ist und die Kodierelemente 5' mit den verbreiterten kugeligen Druckkörpern 5a' von ihm statt einwärts in Richtung radial auswärts abstehen. Auch in diesem Falle vermögen sich die Druckkörper 5a' der Kodierelemente 5' bei angesetztem Meßkopf MK zwischen der Stirnseite des Grundkörpers 1 und der Leitgummischicht 7 abzustützen und zwischen den zugehörigen Kontakten K, K' einen Verformungsdruck auf die Leitgummischicht 7 auszuüben.

Beim Ausführungsbeispiel gemäß Fig. 4 und 5 kann der Außenumriß des Grundkörpers 1' zur freien Stirnseite hin kreisförmig sein, da dieser mittels eines Inbus-Schlüssels in die Maschine 3 einschraubbar ist. Der kreisrunde Außenumriß erlaubt es, den Meßkopf MK, wie in Fig. 5 dargestellt, in einer Hülse 8 zu führen, die auf den Grundkörper 1' aufschraubbar ist.

Für die Erfindung ist es im Prinzip gleichgültig, ob die aus den Kontakten K,K', der dazwischen befindlichen Leitgummischicht 7 und gewissermaßen dem Vorhandensein oder Nichtvorhandensein eines Druckelements 5a bestehenden und je nach Beaufschlagungszustand eine binäre 0 oder eine binäre L verkörpernden Schalter -bzw. Widerstände mit je nach Beaufschlagung unterschiedlichem Widerstandswert- parallel oder seriell abgefragt werden. Die parallele Abfrage hat den Vorteil großer Geschwindigkeit, die serielle den Vorteil, daß zur Übertragung der Abfragesignale in den Rechner nur eine zweipolige Leitung benötigt wird. Die in Fig. 6 dargestellte Schaltung bewirkt eine serielle Abfrage mit anschließendem automatischem Übergang vom Erkennungszyklus in die Meßphase.

Die Schaltung gemäß Fig. 6 befindet sich im Inneren des Meßkopfes MK und funktioniert als Multiplexer, der es im Zusammenwirken mit den jeweils aus einem Kodierelement 5 bzw. 5' und einem Kontaktpaar K,K' bestehenden Schaltern ermöglicht, einen kodierten Impulszug zu erzeugen, dessen serielle Kodierung der parallelen Kodierung entspricht, die an der jeweiligen Meßstelle MS mittels der Kodierelemente 5 bzw. 5' vorgegeben ist.

Bei der Schaltungsanordnung gemäß Fig. 6 sind zwei Dezimalzähler Z₀ und Z₁ (z.B. vom Typ 4014) so beschaltet, daß die Schaltungsanordnung als Multiplexer mit 18 Paralleleingängen 00 - 08 und 11 bis 19 sowie dem seriellen Ausgang auf der Leitung L wirkt. An zwölf dieser Paralleleingänge 00 bis 08 und 11 bis 19 liegen die oben geschilderten, jeweils von einem der Kodierelemente 5 beaufschlagten oder unbeaufschlagt gebliebenen, aus einem Paar von Kontakten K und K' mit sich dazwischen erstreckender Leitgummischicht 7 bestehenden Schalter an, so daß die Größe der die einzelnen Paralleleingänge beaufschlagenden Lasten vom jeweiligen Schaltzustand der betreffenden Schalter abhängen. Im Ausführungsbeispiel ist, wie nur beim Anschluß 0 des Zählers Z₀ dargestellt, jedes Kontaktpaar K, K' mit der sich dazwischen erstreckenden Leitgummischicht 7 direkt zwischen den jeweiligen Paralleleingang und Masse geschaltet, so daß im wesentlichen allein die Leitgummischicht 7 mit ihrem jeweiligen Beaufschlagungszustand den zwischen Masse und Anschluß geschalteten Widerstand der Größe nach festlegt. Dieser Widerstand hat in dem einen Schaltzustand des Schalters einen Wert, der von demjenigen deutlich unterschiedlich ist, der im anderen Schaltzustand des Schalters vorliegt.

Die Schaltung gemäß Fig. 6 arbeitet folgendermaßen:

Zu Beginn eines Erkennungszyklus sind die Kondensatoren C₁ und C₂ entladen, so daß bei dem die Initiierung dieses Zyklus bewirkenden sprungartigen Anlegen einer Spannung vom (nicht dargestellten) Computer her über die Leitung L, diese Kondensatoren aufgeladen werden und auf den res-Eingang ein Rücksetzimpuls gelangt, der den oberen Zähler Z_{O} und über dessen Anschluß CO und den res-Anschluß des Zählers Z₁ auch den letzteren auf "0" setzt, d. h. in einen Schaltzustand bringt, in dem die jeweiligen Anschlüsse 0 ein anderes Potential aufweisen, als die übrigen Anschlüsse 1 - 9. Beim Ausführungsbeispiel bleiben die letzteren auf Masse-Potential, während das Potential am Anschluß "O" auf die Versorgungsspannung am Anschluß VDD, jedenfalls aber auf einen von Null deutlich verschiedenen Wert von vorbestimmter Größe angehoben wird.

Die vom Computer her über die Leitung L anfänglich an die Schaltung angelegte Spannung wird nach einer vorgegebenen Taktzeit, die im Ausführungsbeispiel 5ms beträgt, kurzzeitig -im Ausführungsbeispiel für 20µs- unterbrochen. Die kurzzeitige Unterbrechung der Energiezufuhr über die Leitung L hat einen am ck-Anschluß des Zählers Z_{O} wirksam werdenden Taktimpuls zur Folge, wodurch beim Zähler Z_{O} der Anschluß 1 gesetzt und der Anschluß 0 auf Masse-Potential zurückgestellt wird. Da der Anschluß 9 des Zählers Z₀ zu diesem Zeitpunkt auf Massepotential liegt, befindet sich die Diode D im leitenden Zustand, so daß der vorgenannte Taktimpuls vom ck-Anschluß des Zählers Z₁ ferngehalten wird und dieser in dem zu Beginn des Erkennungszyklus eingestellten Zustand verbleibt, in dem alle seine Anschlüsse bis auf den 0-Anschluß auf Massepotential liegen.

Die Energieversorgung für die beiden Zähler Z_{O} und Z₁ bleibt trotz der kurzen, vom Rechner bewirkten Unterbrechung aufrechterhalten, weil sie an der Schaltung mittels des Kondensators C₁ gepuffert ist.

Da die Kondensatoren C₁ und C₂ aufgeladen sind und der Widerstand R₂, über den der res-Eingang des Zählers Z₀ an Masse geschaltet ist, so bemessen ist, daß sich die Ladung am Kondensator C₂ in der kurzen Zeitdauer der Unterbrechung kaum ändert, hat diese Unterbrechung auch keinen Einfluß auf den res-Eingang.

Der ersten Unterbrechung folgen rechnergesteuert jeweils in gleichmäßigen Abständen von 5ms weitere so lange, bis die Anschlüsse 0 bis 8 des Zählers Z₀ der Reihe nach durchgeschaltet worden sind. Dann wird, wie aus Fig.6 ersichtlich, mit der nächstfolgenden Unterbrechung der Anschluß 9 dieses Zählers aktiviert; da dieser mit dem inh-Anschluß des Zählers 0 permanent verbunden ist, wird der Zähler Z₀ in einem Zustand angehalten, in dem sämtliche Anschlüsse 00-08 inaktiv sind.

Mit der Anhebung des Potentials am inh-Eingang gelangt die Diode D in den nichtleitenden Zustand, so daß sich nunmehr die durch die weiterhin folgenden Unterbrechungen bedingten Taktimpulse am Anschluß ck des Zählers T₁ auswirken und diesen von da an periodisch weiterschalten können, während der Zähler Z₀ wegen der aufrechterhalten bleibenden Erregung seines inh-Anschlusses stehen bleibt. Für die Aktivierung des Anschlusses 9 des Zählers Z₀ und die Einleitung der Weiterschaltung des Zählers Z₁ genügt eine kurze Zeitdauer. Der positive Impuls zwischen den vom Zähler ₁ bzw. Zähler ₂ beeinflußten Kennimpulsen von 5 ms Dauer kann also wesentlich kürzer sein als diese. Seine Dauer ist beim Ausführungsbeispiel auf 20us festgesetzt ist, und er ist damit von den eigentlichen Kennimpulsen problemlos unterscheidbar.

Mit der ersten auf die Aktivierung des inh-Anschlusses des Zählers 0 folgenden Unterbrechung wird der Zähler Z₁ vom Anschluß 0 auf den Anschluß 11 weitergeschaltet, d.h. dieser Anschluß 1 aktiviert, während die anderen Anschlüsse des Zählers Z₁ ebenso wie diejenigen des Zählers Z₀ inaktiv bleiben. Auf die gleiche Weise wie beim Zähler Z₀ wird in der Folge auch beim Zähler Z₁ mit jeder weiteren Unterbrechung der bis dahin aktive Anschluß deaktiviert und der nächstfolgende aktiviert, so daß auf die Dauer des Erkennungszyklus von der Summe der Anschlüsse 0 bis 8 des Zählers Z₀ und der Anschlüsse 1 bis 9 des Zählers Z₁ immer nur ein einziger aktiviert ist, d.h. auf Spannung liegt. Deswegen und wegen der nachstehend geschilderten Gegebenheiten bilden die vorgenannten Anschlüsse der beiden Dezimalzähler die Paralleleingänge 00 bis 08 und 11 bis 18 eines Multiplexers und die parallelgeschalteten Versorgungsanschlüsse VDD dessen seriellen Ausgang.

Der Energieverbrauch der beiden Zähler Z₀ und Z₁ setzt sich aus einem Grundverbrauch und einem zusätzlichen Verbrauch zusammen, welch letzterer durch die an dem jeweils durchgeschalteten Parallelanschluß anliegende Last bedingt ist. Der Grundverbrauch ist derjenige Verbrauch, den die beiden Zähler Z_{O} und Z₁ bei an VDD anliegender Versorgungsspannung haben, wenn alle "Paralleleingänge" (die bei der normalen Zählerfunktion Zählerausgänge darstellen) bei beiden Zählern unbeschaltet sind.

Die vom Computer her angelegte Spannung ist auf einen festen Wert geregelt, so daß sich die Größe der an dem jeweils durchgeschalteten Parallelanschluß der Zähler Z₀ und Z₁ anliegenden Last in der Größe des in der Leitung L fließenden Stromes wiederspiegelt, der sich aus dem im wesentlichen gleichbleibenden Grundstrom und einem lastabhängigen zusätzlichen Strom zusammensetzt. Ein kleinerer Lastwiderstand bedingt einen größeren zusätzlichen Strom und damit auch einen größeren Gesamtstrom als ein größerer.

Da der Widerstand an jedem der vorgenannten Parallelanschlüsse vom Beaufschlagungsgrad der zugehörigen Leitgummischicht abhängt, enthält der Strom in der Leitung L eine Aussage über die jeweilige Einstellung des jeweils zugehörigen Kodierelements 5 bzw. 5' und kann bei ausreichender Differenz seiner beiden möglichen unterschiedlichen Werte zur Festlegung des Wertes 0 oder L einer Binärstelle in einer Binärzahl eingesetzt werden, deren Stellenzahl der Anzahl der Paralleleingänge entspricht, die zur Kodierung der Meßstellen eingesetzt werden. Bei den Ausführungsbeispielen der Ansetzteile AT gemäß Fig. 1 bis 5 sind dies, wie bereits gesagt, zwölf, so daß damit 4096 verschiedene Kodierungsmöglichkeiten für den zugehörigen 12-stelligen Impulszug gegeben sind.

Wie bereits dargelegt, werden bei den in Fig. 1 bis 5 dargestellten Ausführungsbeispielen der Ansetzteile AT über die zur Bildung der Meßstellen-Kenndaten verwendeten Kodierelemente 5, 5' hinaus weitere für die Fernerkennung der relativen Winkelposition von Ansetzteil AT und Meßkopf MK im zusammengesteckten Zustand eingesetzt. Diese Kodierelemente 9 sind ebenfalls eigenen Paralleleingängen des Multiplexers zugeordnet und bewirken Funktionen, die mit denjenigen der zur Meßstellenkodierung verwendeten gleichartig sind, so daß sich auch die relative Winkelposition in einem entsprechend kodierten Abschnitt des in Fig. 7 dargestellten binärkodierten Impulszuges ausdrückt, der im Rechner auswertbar ist.

Es kommt nicht darauf an, daß die beiden möglichen Stromwerte von Parallelanschluß zu Parallelanschluß genau gleichen Wert haben. Es genügt, daß sich der Stromwert (z.B. i₀₁) für den einen Beaufschlagungszustand von dem Stromwert (z.B. i₀₂) für den anderen Beaufschlagungszustand deutlich unterscheidet und überdies bei allen Paralleleingängen der eine Stromwert deutlich unterhalb und der andere deutlich oberhalb eines gemeinsamen Schwellwertes SW liegt. Es hat sich gezeigt, daß ein Unterschied von 10% ausreichend ist.

An den Erkennungszyklus schließt sich automatisch die Meßphase an. Dies wird dadurch erreicht, daß mit dem Schaltimpuls, der durch die auf den letzten Kennimpuls 19 folgende Unterbrechung erzeugt wird, beim Zähler Z₁ wieder der Anschluß 0 aktiviert wird und demzufolge über den Transistor T der Verstärker V eingeschaltet wird, der nun das Signal vom Meßwandler MW auf die Leitung L bringt. Der Meßvorgang kann nach einer vorbestimmten Zeit automatisch abgebrochen werden, woraufhin die Vorrichtung nach kurzer Zeit wieder in den Ausgangszustand mit entladenen Kondensatoren C₁ und C₂ gelangt.

Die Fig. 8 zeigt eine Abwandlung der Vorrichtungen gemäß Fig. 1 bis 7, bei denen der Meßwandler MW in den Meßkopf MK eingebaut ist. Die Abwandlung ermöglicht es, auch für den Meßkopf unzugängliche Meßstellen abzufragen.

Bei der abgewandelten Ausführung befindet sich die Meßstelle MS an der Maschine 3' unmittelbar über dem Fundament. Anstelle des Ansetzteils ist an dieser Meßstelle ein eingehäuster Meßwandler MW' fest mit der Maschine 3' verbunden. Der Meßwandler MW' ist über eine Leitung 11 mit einem in Fig. 2 mit unterbrochenen Linien schematisch dargestellten Steckverbindungsteil ST verbunden, der sich in einem Ansetzteil AT', befindet, der im übrigen wie die vorstehend beschriebenen ausgeführt ist und in der gleichen Weise wie diese mit einem Meßkopf entsprechend dem Meßkopf MK, jedoch ohne Meßwandler MW, zusammenzuarbeiten vermag. Der Meßkopf ist bei der abgewandelten Ausführungform mit einem Gegenstück zu dem im Ansetzteil AT' befindlichen Steckverbindungsteil ST (Fig.2) ausgerüstet, wobei die Anordnung so getroffen ist, daß der externe Meßwandler MW' anstelle des in den Meßkopf MK der Ausführungsbeispiele gemäß den Figuren 1 bis 5 eingebauten Meßwandlers MW in der aus Fig. 6 ersichtlichen Position automatisch an den Verstärker V angeschlossen wird, wenn das Steckverbindungsteil ST und das Gegenstück des Meßkopfes beim Ansetzen des Meßkopfes an den versetzten Ansetzteil AT' zusammengesteckt werden.

In Fig. 1 ist als Beispiel eingetragen, wie bei einer Anlage mit drei Maschinenzügen Ml, M2 und M3 sowie drei Motoren ND, HD, MD jeweils hinten (h), vorne (v) und in der Mitte (m) mit je drei Meßstellen am Getriebe GT, Abtrieb A, Lager L, Gehäuse GH und Fundament F zur Erfassung der mechanischen Vibrationen in vertikaler (v), horizontaler (h) und axialer (ax) Richtung die Kodierelemente 5 den zahlreichen Meßstellen zu deren unterscheidender Kennzeichnung zugeordnet und entsprechend der Zuordnung beschriftet werden können. Bei den in der Mitte zwischen zwei Zuordnungen stehenden Beschriftungen, z.B. der Beschriftung "m" zwischen "h" und "v", sind jeweils beide Kodierelemente 5 in gleicher Weise (z.B. LL) eingesetzt, während für die beiden anderen Zuordnungen die Kodierelemente in voneinander unterschiedlicher Einstellung (OL bzw. LO) verwendet werden.

## Patentansprüche

1. Verfahren zum Feststellen des Zustandes, insbesondere des Verschleißzustandes und/oder Betriebszustandes, einer oder mehrerer Maschinen (3,3'), bei dem an mehreren vorgegebenen Meßstellen (MS) jeweils mittels eines dort lösbar an die betreffende Maschine (3,3') ansetzbaren Meßkopfes (MK), der einen Meßwandler (MW) aufweist, der eine für den festzustellenden Zustand charakteristische Größe in ein entsprechendes elektrisches Signal umwandelt, an den einzelnen Meßstellen (MS) Meßdaten gewonnen und zur Auswertung in einen Rechner eingegeben werden, wobei für jede Meßstelle (MS) mittels einer dieser fest zugeordneten, an der Maschine (3;3') befestigten und mit elektrischen Kontakteinrichtungen (K,K') am Meßkopf (MK) zusammenwirkenden Kodiereinrichtung (KE) zusätzlich zu den Meßdaten Kenndaten erzeugt werden, die die betreffende Meßstelle (MS) von den anderen unterscheidbar kennzeichnen und den Meßdaten zugeordnet mit in den Rechner eingegeben werden, wofür jede Kodiereinrichtung (KE) mehrere Kodierelemente (5;5') aufweist, die die Kontakteinrichtungen (K,K') am Meßkopf (MK) kodiert beaufschlagen, **dadurch gekennzeichnet,** daß
a) für jedes der Kodierelemente (5;5'), die planmäßig maximal an den Meßstellen (MS) vorhanden sein können, im Meßkopf (MK) eine eigene Kontakteinrichtung (K,K') vorgesehen wird,
b) die Kodierelemente (5;5') an jeder Meßstelle (MS) nach einem für diese spezifischen und nur für diese vorgesehenen Code in den einen oder anderen von zwei verschiedenen Arbeitszuständen gebracht werden, in deren einem sie die zugehörige Kontakteinrichtung (K,K') im angesetzten Meßkopf (MK) permanent beaufschlagen und in deren anderem sie diese Kontakteinrichtung (K,K') permanent unbeaufschlagt lassen,
c) im angesetzten Meßkopf (MK) für jede Kontakteinrichtung (K,K') ein elektrisches Signal derart erzeugt wird, daß es abhängig davon, ob die betreffende Kontakteinrichtung (K,K') von dem zugehörigen Kodierelement (5;5') beaufschlagt ist oder nicht, den einen bzw. anderen von zwei verschiedenen Werten hat, und
d) diese elektrischen Signale als Kenndaten für die jeweilige Meßstelle (MS) parallel oder seriell in den Rechner eingegeben werden.

2. Verfahren nach Anspruch 1, **dadurch gekennzeichnet**, daß mit jedem Kodierelement (5;5') und der zugehörigen Kontakteinrichung (K,K') in Abhängigkeit von deren Beaufschlagungszustand die Größe des Eingangssignals gesteuert wird, das an einem dem jeweiligen Kodierelement (5;5') und seiner Kontakteinrichtung (K,K') individuell zugeordneten Paralleleingang (00-08,11-19) eines im Meßkopf (MK) befindlichen Multiplexers anliegt, dessen serieller Ausgang mit dem Rechner verbunden ist.

3. Verfahren nach Anspruch 2, **dadurch gekennzeichnet,** daß die Größe des Eingangssignals jeweils durch Einstellen des Widerstands in einem zum betreffenden Paralleleingang (00-08,11-19) führenden Strompfad auf den einen oder anderen von zwei deutlich unterschiedlichen Werten mittels des Kodierelements (5;5') und der Kontakteinrichtung (K,K') vorgegeben wird.

4. Verfahren nach Anspruch 2 oder 3, **dadurch gekennzeichnet**, daß vor dem Ansetzen des Meßkopfes (MK) an eine Maschine (3,3') in einem Testzyklus die Größe der seriellen Ausgangssignale des Multiplexers im nicht angesetzten Zustand des Meßkopfes (MK) festgestellt und zur Durchführung eines Nullabgleichs herangezogen wird.

5. Vorrichtung zum Durchführen des Verfahrens nach einem der Ansprüche 1 bis 4, mit einem von Meßstelle (MS) zu Meßstelle (MS) umsetzbaren, zur Datenübertragung mit dem Rechner verbundenen Meßkopf (MK), der einen Meßwandler (MW) zum Umwandeln der zu prüfenden Größe in ein entsprechendes elektrisches Signal aufweist, und mit je einem bei jeder Meßstelle (MS) an der/den Maschine(n) (3;3') starr befestigten Ansetzteil (AT) zum Führen und ausgerichteten Befestigen des Meßkopfes (MK) an der betreffenden Meßstelle (MS), wobei jeder Ansetzteil (AT) mehrere, an ihm in einer festen gegenseitigen räumliche Lage angeordnete Kodierelemente (5;5') aufweist, die mit zugehörigen Kontakteinrichtungen (K,K') am angesetzten Meßkopf (MK) die Kodierung des unter ihrer Mitwirkung erzeugten, für die betreffende Meßstelle (MS) kennzeichnenden elektrischen Kennsignals bestimmen, **dadurch gekennzeichnet**, daß der Meßkopf (MK) für jedes der Kodierelemente (5;5'), die maximal an einem Ansetzteil (AT) zur Bildung von Kenndaten vorhanden sein können, eine eigene Kontakteinrichtung (K,K') aufweist, daß die Kodierelemente (5;5') einer Meßstelle (MS) nach einem nur für diese vorgesehenen Kode in den einen oder anderen von zwei unterschiedlichen Arbeitszuständen derart eingstellt sind, daß sie im angesetzten Zustand des Meßkopfes (MK) die zugehörige Kontakteinrichtung (5;5') in dem einen Arbeitszustand permanent beaufschlagen und in dem anderen Arbeitszustand permanent unbeaufschlagt lassen, und daß eine Schaltungsanordnung (Fig.6) vorgesehen ist, die den Beaufschlagungszustand der den Kodierelementen (5;5') zugeordneten Kontakteinrichtungen (K,K') jeweils derart in ein elektrisches Signal umwandelt, daß dieses abhängig davon, ob die betreffende Kontakteinrichtung (K,K') von ihrem Kodierelement (5;5') beaufschlagt ist oder nicht, den einen bzw. anderen von zwei in verschiedenen Bereichen liegenden Werten hat.

6. Vorrichtung nach Anspruch 5, **dadurch gekennzeichnet**, daß die den jeweiligen Beaufschlagungszuständen der Kontakteinrichtungen (K,K') entsprechenden elektrischen Signale jedes für sich an einem der Paralleleingänge (00-08,11-19) eines Multiplexers anliegen, wobei jedem Signal ein anderer Paralleleingang zugeordnet ist und der serielle Ausgang des Multiplexers (Leitung L) mit dem Rechner verbunden ist.

7. Vorrichtung nach Anspruch 6, **dadurch gekennzeichnet**, daß der Multiplexer so ausgeführt ist, daß die sequenzielle Verbindung seiner Paralleleingänge (00-08,11-19) mit dem seriellen Ausgang durch rechnergesteuerte kurzzeitige Unterbrechung der Stromversorgung für den Multiplexer bewirkbar ist und dabei die Stromversorgungsleitung (L) gleichzeitig den seriellen Ausgang des Multiplexers bildet.

8. Vorrichtung nach Anspruch 7, **dadurch gekennzeichnet,** daß die Kodierelemente (5;5') bei angesetztem Meßkopf (MK) mit den ihnen zugeordneten Kontakteinrichtungen (K,K') jeweils einen direkt in einem zugehörigen Strompfad liegenden Schalter bilden, der je nach der Voreinstellung des Kodierelements (5;5') die eine oder andere von zwei möglichen Schaltstellungen aufweist, die deutlich unterschiedliche Widerstände in dem Strompfad herbeiführen, und daß die Strompfade jeweils zwischen den zugehörigen Paralleleingang (00-08,11-19) des Multiplexers und ein allen Strompfaden gemeinsames, festes Potential im Meßkopf (MK) geschaltet sind.

9. Vorrichtung nach Anspruch 7 oder 8, **dadurch gekennzeichnet**, daß die beiden Schaltzustände eines jeden Kodierelements (5;5') durch das Vorhandensein oder Nichtvorhandensein eines Druckkörpers (5a;5a') an einer der zugehörigen Kontakteinrichtung (K,K') gegenüberstehenden Position an der Meßstelle (MS) realisiert sind, wobei jeder vorhandene Druckkörper (5a;5a') die zugehörigen Kontakteinrichtung (K,K') beaufschlagt.

10. Vorrichtung nach Anspruch 9, **dadurch gekennzeichnet,** daß die für jede mögliche Position eines Kodierelements (5;5') am Meßkopf (MK) vorgesehenen Kontakteinrichtungen K,K') jeweils aus einem Paar von im Abstand befindlichen, durch eine Leitgummischicht (7) miteinander verbundenen elektrischen Kontakten (K und K') bestehen und jeder Druckkörper (5a;5a') im angesetzten Zustand des Meßkopfes (MK) zwischen den beiden Kontakten (K und K') einen Verformungsdruck von solcher Größe auf die Leitgummischicht (7) ausübt, daß dadurch der von der Leitgummischicht (7) zwischen den Kontakten (K und K') bewirkte elektrische Widerstand gegenüber dem Widerstand im unbeaufschlagten Zustand bei fehlendem Druckkörper (5a;5a') deutlich verringert ist.

11. Vorrichtung nach Anspruch 9 oder 10, **dadurch gekennzeichnet**, daß die Druckkörper (5a;5a') an einem an der betreffenden Meßstelle (MS) an der Maschine (3;3') befestigbaren gemeinsamen Halter (4,4') angebracht sind.

12. Vorrichtung nach einem der Ansprüche 6 bis 11, **dadurch gekennzeichnet**, daß der Ansetzteil (AT) in die Maschine (3;3') einschraubbar ist und eine Kontaktfläche für den Meßwandler (MW) aufweist.

13. Vorrichtung nach einem der Ansprüche 6 bis 12, **dadurch gekennzeichnet**, daß am Ansetzteil (AT) über die zur Bildung der Meßstellen-Kenndaten verwendeten Kodierelemente (5;5') hinaus weitere, in einer festen relativen Position untereinander und zum Ansetzteil (AT) an diesem angebrachte Kodierelemente (9) zur Erkennung der relativen Lage zwischen Ansetzteil (AT) und daran befestigtem Meßkopf (MK) vorhanden sind, und daß diese Kodierelemente (9) Funktionsabläufe bewirken, die mit denjenigen, die die zur Bildung der Kenndaten vorgesehenen Kodierelemente (5;5') herbeiführen, gleichartig sind, so daß der insgesamt gebildete kodierte Impulszug außer den Kenndaten für die jeweilige Meßstelle (MS) auch das Kennsignal für die Relativposition von Meßkopf (MK) und Ansetzteil (AT) beinhaltet.

14. Vorrichtung zur Abfrage von Messwandlern (MW'), die eine zu prüfende physikalische Grösse in ein entsprechendes elektrisches Signal umwandeln, wobei die Messwandler an unzugänglichen Messstellen an Maschinen permanent angebracht sind, und die Vorrichtung folgende Merkmale aufweist:
- an zugänglichen Abfragestellen der Maschine oder Maschinen ist jeweils ein Ansetzteil (AT') starr befestigt,
- an jeden Ansetzteil (AT') kann ein Messkopf (MK) angesetzt werden,
- jeder Ansetzteil (AT') dient zum Führen und ausgerichteten Befestigen des Messkopfes an der betreffenden Abfragestelle,
- der Messkopf ist zur Übertragung von Daten an einen zugeordneten Rechner geeignet,
- der Messkopf ist mit einer Gegensteckkontakteinrichtung versehen,
- an jedem Ansetzteil (AT') befindet sich ein Steckverbindungsteil (ST),
- jedes Steckverbindungsteil (ST) ist mit einem Kabel (11) mit dem an der Messstelle befindlichen Messwandler (MW') verbunden,
- jedes Steckverbindungsteil (ST) kann mit der Gegensteckkontakteinrichtung des Messkopfes steckbar in Kontakt gebracht werden,
- jeder Ansetzteil (AT') weist mehrere Kodierelemente (5,5') auf, welche relativ zu diesem eine feste räumliche Lage einnehmen,
- durch die Kodierelemente wird für einen angesetzten Messkopf eine Kodierung eines für die Abfragestelle kennzeichnenden elektrischen Kennsignals vermittels zugehöriger Kontakteinrichtungen (K,K') bestimmt, welche sich an dem Messkopf befinden,
- jedem Kodierelement (5, 5') ist eine eigene Kontakteinrichtung (K, K') zugeordnet.

15. Vorrichtung nach Anspruch 11, mit folgenden Merkmalen:
- ein einzelner Druckkörper (5a, 5a') steht jeweils genau einem Kontaktpaar (K, K') gegenüber
- mindestens einer der Druckkörper ist, insbesondere durch Abbrechen, leicht entfernbar.

## Claims

1. Method for determining the condition, especially the condition of wear and/or the operating condition, of one or more machines (3, 3'), in which at several predetermined measuring sites (MS), by means of a measuring head (MK) which can be removably placed on the particular machine (3, 3'), having a measurement transducer (MW) which converts a quantity characteristic of the condition being determined into a corresponding electric signal, measurement data is acquired at the individual measuring sites (MS) and put into a computer for evaluation, and for each measuring site (MS), by means of an encoding device (KE), permanently assigned to that measuring site, secured to the machine (3, 3') and interacting with electrical contact devices (K, K') on the measuring head (MK), characteristic data is generated in addition to the measurement data, which characterizes the particular measuring site (MS) in a way distinguishable from the others and is put into the computer, coordinated with the measurement data, for which each encoding device (KE) has several encoding elements (5, 5'), which activate the contact units (K, K') on the measuring head (MK) in an encoded way, characterized in that:
a) the measuring head (MK) has its own contact unit (K, K') for each of the encoding elements (5, 5') which can be present at the measuring sites (MS),
b) the encoding elements (5, 5') at each measuring site (MS) according to a code specific to them and provided only for them are placed in one or the other of two different working conditions, in one of which they permanently activate the corresponding contact unit (K, K') in the mounted measuring head (MK) and in the other they leave this contact unit (K, K') permanently unactivated,
c) in the attached measuring head (MK), an electric signal is generated for each contact unit (K, K') so that, depending on whether or not the particular contact unit (K, K') is activated by the corresponding encoding element (5, 5'), it has one or the other of two different values, and
d) these electric signals are put into the computer, in parallel or serial manner, as characteristic data for the particular measuring site (MS).

2. Method per claim 1, characterized in that each encoding element (5, 5') and the corresponding contact unit (K, K'), according to their state of activation, control the magnitude of the input signal that is present on a parallel input (00-08, 11-19), individually assigned to the particular encoding element (5, 5') and its contact unit (K, K'), of a multiplexer located in the measuring head (MK), whose serial output is connected to the computer.

3. Method per claim 2, characterized in that the magnitude of the input signal is determined each time by setting the resistance in a current pathway leading to the particular parallel input (00-08, 11-19) to one or another of two distinctly different values by means of the encoding element (5, 5') and the contact unit (K, K').

4. Method per claim 2 or 3, characterized in that, before mounting the measuring head (MK) on a machine (3, 3'), in a test cycle, the magnitude of the serial output signals of the multiplexer are determined with the measuring head (MK) dismounted and used to carry out a 0 balance.

5. Device to implement the method according to one of claims 1-4, with a measuring head (MK) connected to the computer for data transmission and capable of being moved from one measuring site (MS) to another, having a measurement transducer (MW) for converting the quantity being checked into a corresponding electric signal, and with a mounting piece (AT) for guiding and attaching the measuring head (MK) to the particular measuring site (MS), being rigidly fastened to each measuring site (MS) on the machine or machines (3, 3'), each mounting piece (AT) having several encoding elements (5, 5'), arranged on it in a fixed mutual spacial position, which along with corresponding contact units (K, K') on the measuring head (MK) in place, determine the encoding of the electric signal generated in this way for the particular measuring site (MS), characterized in that the measuring head (MK) has its own contact unit (K, K') for each of encoding elements (5, 5') which may be present on one mounting piece (AT) to form the characteristic data, the encoding elements (5, 5') of one measuring site (MS), according to a code provided only for them, are switched to one or another of two different operating conditions, when the measuring head (MK) is mounted they permanently activate the corresponding unit (5, 5') in one operating condition and leave it permanently unactivated in the other operation condition, and a circuit arrangement (Figure 6) is provided, which converts the state of activation of the contact units (K, K') assigned to the encoding elements (5, 5') into an electric signal, such that this has one or the other of two values lying in different ranges, according to whether or not the particular contact unit (K, K') is activated by its encoding element (5, 5').

6. Device per claim 5, characterizea in that the electric signals corresponding to the particular activation conditions of the contact units (K, K') are each present at one of the parallel inputs (00-08, 11-19) of a multiplexer, each signal being matched up with another parallel input and the serial output of the multiplexer (line L) being connected to the computer.

7. Device per claim 6, characterized in that the multiplexer is designed so that the sequential connection of its parallel inputs (00-08, 11-19) to the serial output can be accomplished by brief computer-controlled interruption of the power supply for the multiplexer, while at the same time the power supply line (L) constitutes the serial output of the multiplexer.

8. Device per claim 7, characterized in that the encoding elements (5, 5') when the measuring head (MK) is in place, along with their corresponding contact units (K, K'), each form a switch lying directly in a corresponding current pathway, which has one or another of two possible switch settings, according to the preliminary adjustment of the encoding element (5, 5'), producing distinctly different resistances in the current pathway, and the current pathways are each switched between the corresponding parallel input (00-08, 11-19) of the multiplexer and a fixed potential. in the measuring head (MK) that is common to all current pathways).

9. Device per claim 7 or 8, characterized in that the two switch conditions of each encoding element (5, 5') is realized by the presence or absence of a pressure body (5a, 5a') at a position on the measuring site (MS) opposite the corresponding contact unit (K, K'), each existing pressure body (5a, 5a') activating the corresponding contact unit (K, K').

10. Device per claim 9, characterized in that the contact units (K, K') provided for each possible position of an encoding element (5, 5') on the measuring head (MK) each consists of a pair of electrical contacts (K, K'), located at a distance from each other and joined by a conducting rubber layer (7) and each pressure body (5a, 5a') when the measuring head (MK) is put in place exerts a deformation pressure between the two contacts (K, K') on the conducting rubber layer (7) of such magnitude that the electrical resistance realized by the conducting rubber layer (7) between the contacts (K, K') is diminished considerably from the resistance in the unactivated condition with no pressure body (5a, 5a').

11. Device per claim 9 or 10, characterized in that the pressure bodies (5a, 5a') are arranged on a common holder (4, 4') which can be fastened to the machine (3, 3') at the particular measuring site (MS).

12. Device per one of claims 6-11, characterized in that the mounting piece (AT) can be screwed into the machine (3, 3') and has a contact surface for the measurement transducer (MW).

13. Device per one of claims 6-12, characterized in that, besides the encoding elements (5, 5') used on the mounting piece (AT) that are used to form the characteristic data of the measuring sites, other encoding elements (9) to detect the relative position between the mounting piece (AT) and the measuring head (MK) attached to it are arranged in a permanent relative position to each other and to the mounting piece (AT), and these encoding elements (9) produce functional sequences that are identical to those produced by the encoding elements (5, 5') provided to form the characteristic data, so that the overall resulting encoded pulse train contains, in addition to the characteristic data for the particular measuring site (MS), the marking signal for the relative position of measuring head (MK) and mounting piece (AT).

14. Modification of the device according to one of the preceding claims, characterized in that, when the measuring site (MS) is inaccessible, a measurement transducer (MW') permanently remaining at this site is arranged on the machine (3') and the corresponding mounting piece (AT) is fastened, along with the encoding elements (5, 5'), to an accessible site on the machine (3), and the measuring head (MK) is further provided with a plug and socket device (ST), by means of which the measurement transducer (MW'), located at the measurement site (MS) and connected via a cable (11) to a counterpart (GST) on the mounting piece (AT), can be used instead of the measurement transducer (MK) installed in the measuring head (MK') to furnish the measured data to the computer.

15. Encodable holder (4, 4') with pressure bodies (5, 5') for use in the device per claim 11, characterized in that a pressure body (5a, 5a') which is easily detachable is placed in each position opposite a pair of contacts (K, K').

## Revendications

1. Procédé pour déterminer l'état, notamment l'état d'usure et/ou l'état de fonctionnement, d'une ou de plusieurs machines (3,3'), dans lequel sont acquises des données de mesure pour chaque point de mesure (MS), en plusieurs points de mesure (MS) prédéfinis, au moyen d'une tête de mesure (MK) qui peut y être appliquée de manière amovible sur la machine (3, 3') concernée qui présente un convertisseur de mesure (MW) qui convertit une grandeur caractéristique de l'état à déterminer en un signal électrique correspondant, et qui sont ensuite transmises à un ordinateur pour y être traitées, pour chaque point de mesure (MS) des données d'identification étant générées en plus des données de mesure au moyen d'un dispositif de codage (KE) affecté à demeure à celui-ci, fixé sur la machine (3, 3') et agissant conjointement avec des dispositifs de contact électrique (K, K') sur la tête de mesure (MK), lesdites données d'identification permettant d'identifier avec certitude le point de mesure (MS) concerné des autres et étant transférées à l'ordinateur en même temps que les données de mesure associées, chaque dispositif de codage (KE) présentant à cet effet plusieurs éléments de codage (5, 5') qui sollicitent les dispositifs de contact (K, K') sur la tête de mesure (MK), caractérisé par le fait que
a) un dispositif de contact (K, K') est prévu dans la tête de mesure (MK) pour chacun des éléments de codage (5, 5') pouvant être présent sur les points de mesure (MS) selon le plan ;
b) les éléments de codage (5, 5') à chaque point de mesure (MS), selon un code spécifique à celui-ci et uniquement prévu pour celui-ci, sont mis dans l'un des deux états logiques différents possibles, dans l'un desquels ils sollicitent en permanence le dispositif de contact (K, K') correspondant dans la tête de mesure (MK) appliquée et dans l'autre ils laissent ce dispositif de contact (K, K') non sollicité en permanence ;
c) un signal électrique est généré dans la tête de mesure (MK) appliquée pour chaque dispositif de contact (K, K') de manière à ce qu'il puisse prendre l'une ou l'autre des deux valeurs différentes suivant que le dispositif de contact (K, K') correspondant soit sollicité ou non par l'élément de codage (5, 5') correspondant ; et
d) ces signaux électriques sont acheminés vers l'ordinateur en parallèle ou en série comme données d'identification pour le point de mesure (MS) concerné.

2. Procédé selon la revendication 1, caractérisé par le fait que la grandeur du signal d'entrée est commandée avec chaque élément de codage (5, 5') et le dispositif de contact (K, K') correspondant en fonction de son état de sollicitation, lequel signal d'entrée est appliqué à l'entrée parallèle (00-08, 11-19), associée individuellement à l'un des différents éléments de codage (5, 5') et son dispositif de contact (K, K'), d'un multiplexeur se trouvant dans la tête de mesure (MK) dont la sortie série est reliée à l'ordinateur.

3. Procédé selon la revendication 2, caractérisé par le fait que la grandeur du signal d'entrée est à chaque fois prédéfinie en réglant la résistance dans une branche de courant menant vers l'entrée parallèle (00-08, 11-19) concernée à l'une ou à l'autre de deux valeurs nettement différentes au moyen de l'élément de codage (5, 5') et du dispositif de contact (K, K').

4. Procédé selon la revendication 2 ou 3, caractérisé par le fait qu'avant l'application de la tête de mesure (MK) sur une machine (3, 3'), la grandeur des signaux de sortie en série du multiplexeur est déterminée dans l'état non appliqué de la tête de mesure (MK) et est utilisée pour réaliser une compensation à zéro au cours d'un cycle de test.

5. Dispositif pour réaliser le procédé selon l'une des revendications 1 à 4, comportant une tête de mesure (MK) pouvant être déplacée d'un point de mesure (MS) à un autre point de mesure (MS) et reliée à l'ordinateur pour transmettre les données, laquelle présente un convertisseur de mesure (MW) pour convertir la grandeur à mesurer en un signal électrique correspondant, et comportant à chaque fois une pièce rapportée (AT) fixée à demeure sur la(les) machine(s) (3, 3') à chaque point de mesure (MS) et destinée au guidage et à la fixation alignée de la tête de mesure (MK) au point de mesure (MS) correspondant, chaque pièce rapportée (AT) présentant plusieurs éléments de codage (5, 5') disposés sur elle selon une position opposée fixe dans l'espace et qui, avec les dispositifs de contact (K, K') correspondants sur la tête de mesure (MK) appliquée, génèrent son action un signal électrique d'identification qui identifie le point de mesure (MS) concerné, caractérisé par le fait que la tête de mesure (MK) présente un dispositif de contact (K, K') propre pour chacun des éléments de codage (5, 5') qui peuvent être présent au maximum sur une pièce rapportée (AT) pour former les données d'identification, que les éléments de codage (5, 5') d'un point de mesure (MS) sont réglés d'après un code uniquement prévu pour celui-ci dans l'un ou l'autre des deux états logiques différents de manière à ce que lorsque la tête de mesure (MK) est appliquée, ils maintiennent le dispositif de contact (K, K') correspondant sollicité en permanence dans l'un des états logiques et non sollicité en permanence dans l'autre état logique, et qu'il est prévu un arrangement de circuit (figure 6) qui convertit l'état de sollicitation de chacun des dispositifs de contact (K, K') associés aux éléments de codage (5, 5') en un signal électrique de manière à ce que celui-ci prenne l'une ou l'autre de deux valeurs se trouvant dans des plages différentes, et ceci indépendamment du fait que le dispositif de contact (K, K') correspondant soit sollicité ou non par son élément de codage (5, 5').

6. Dispositif selon la revendication 5, caractérisé par le fait que les signaux électriques correspondant à chacun des états de sollicitation des dispositifs de contact (K, K') sont appliqués chacun pour soi à l'une des entrées parallèles (00-08, 11-19) d'un multiplexeur, chaque signal étant affecté à une autre entrée parallèle et la sortie série du multiplexeur (ligne L) étant reliée à l'ordinateur.

7. Dispositif selon la revendication 6, caractérisé par le fait que le multiplexeur est réalisé de telle manière que la liaison séquentielle de ses entrées parallèles (00-08, 11-19) avec la sortie série peut être obtenue par une brève interruption commandée par l'ordinateur de l'alimentation électrique du multiplexeur et que la ligne d'alimentation électrique (L) forme en même temps la sortie série du multiplexeur.

8. Dispositif selon la revendication 7, caractérisé par le fait que les éléments de codage (5, 5') avec les dispositifs de contact (K, K') qui leurs sont associés, lorsque la tête de mesure (MK) est appliquée, forment chacun un contacteur qui se trouve directement dans une branche de courant correspondante, lequel contacteur présente, suivant le préréglage de l'élément de codage (5, 5'), l'un ou l'autre de deux états logiques possibles qui produisent des résistances nettement différentes dans la branche de courant, et que les branches de courant sont chacune branchées entre l'entrée parallèle (00-08, 11-19) correspondante du multiplexeur et un potentiel fixe commun à toutes les branches de courant dans la tête de mesure (MK).

9. Dispositif selon la revendication 7 ou 8, caractérisé par le fait que les deux états logiques de chaque élément de codage (5, 5') sont réalisés par la présence ou l'absence d'un corps presseur (5a, 5a') à un endroit opposé au dispositif de contact (K, K') associé sur le point de mesure (MS), chaque corps presseur (5a, 5a') présent sollicitant le dispositif de contact (K, K') associé.

10. Dispositif selon la revendication 9, caractérisé par le fait que les dispositifs de contact (K, K') prévus pour chaque position possible d'un élément de codage (5, 5') sur la tête de mesure (MK) se composent chacun d'une paire de contacts électriques (K et K') espacés l'un de l'autre et reliés entre eux par une couche de caoutchouc conducteur (7) et chaque corps presseur (5a, 5a'), lorsque la tête de mesure (MK) est appliquée, exerce une pression de déformation sur la couche de caoutchouc conducteur (7) entre les deux contacts (K et K') d'une grandeur telle que la résistance électrique ainsi produite par la couche de caoutchouc conducteur (7) entre les contacts (K et K') est nettement réduite par rapport à la résistance à l'état non sollicité en l'absence de corps presseur (5a, 5a').

11. Dispositif selon la revendication 9 ou 10, caractérisé par le fait que les corps presseurs (5a, 5a') sont montés sur un support (4, 4') commun pouvant être fixé sur le point de mesure (MS) concerné sur la machine (3, 3').

12. Dispositif selon l'une des revendications 6 à 11, caractérisé par le fait que la pièce rapportée (AT) peut être vissée dans la machine (3, 3') et qu'elle présente une surface de contact pour le convertisseur de mesure (MW).

13. Dispositif selon l'une des revendications 6 à 12, caractérisé par le fait qu'en plus des éléments de codage (5, 5') utilisés pour former les données d'identification des points de mesure, la pièce rapportée (AT) comporte d'autres éléments de codage (9) montés dans une position relative fixe entre eux et par rapport à la pièce rapportée (AT) pour détecter la position relative entre la pièce rapportée (AT) et la tête de mesure (MK) qui est fixée sur celle-ci, et que ces éléments de codage (9) produisent des fonctions qui sont similaires à celles des éléments de codage (5, 5') qui contribuent à la formation des données d'identification, de manière à ce que le train d'impulsions codé formé globalement contient également le signal d'identification pour la position relative de la tête de mesure (MK) et de la pièce rapportée (AT) en plus des données d'identification de chacun des points de mesure (MS).

14. Dispositif pour interroger des convertisseurs de mesure (MW') qui convertissent une grandeur physique à contrôler en un signal électrique correspondant, les convertisseurs de mesure étant installés de manière permanente en des points de mesure inaccessibles sur des machines et le dispositif présentant les caractéristiques suivantes :
- une pièce rapportée (AT') est fixée à demeure sur chaque point d'interrogation accessible de la machine ou des machines,
- une tête de mesure (MK) peut être appliquée sur chaque pièce rapportée (AT'),
- chaque pièce rapportée (AT') sert au guidage et à la fixation alignée de la tête de mesure sur le point d'interrogation concerné,
- la tête de mesure est destinée à transmettre des données à un ordinateur associé,
- la tête de mesure est munie d'un dispositif de contact opposé,
- une pièce de connexion (ST) se trouve sur chaque pièce rapportée (AT'),
- chaque pièce de connexion (ST) est reliée par un câble (11) au convertisseur de mesure (MW) qui se trouve sur le point de mesure,
- chaque pièce de connexion (ST) peut être mise en contact enfichable avec le dispositif de contact opposé de la tête de mesure,
- chaque pièce rapportée (AT') présente plusieurs éléments de codage (5, 5') qui adoptent une position fixe dans l'espace par rapport à celle-ci,
- par le biais des éléments de codage pour une tête de mesure appliquée, un codage d'un signal d'identification électrique identifiant le point d'interrogation est déterminé au moyen de dispositifs de contact (K, K') correspondants qui se trouvent sur la tête de mesure,
- un dispositif de contact (K, K') propre est associé à chaque élément de codage (5, 5').

15. Dispositif selon la revendication 11 présentant les caractéristiques suivantes :
- un corps presseur (5a, 5a') individuel est à chaque fois opposé à exactement une paire de contacts (K, K'),
- au moins l'un des corps presseurs peut être retiré facilement, notamment par cassure.
